(19) **Europäisches Patentamt**

**European Patent Office**

**Office européen des brevets**

(11) **EP 1 103 802 B1**

(12) **FASCICULE DE BREVET EUROPEEN**

(45) Date de publication et mention
de la délivrance du brevet:
**08.02.2006 Bulletin 2006/06**

(51) Int Cl.:
*G01L 5/24* (2006.01)    *G01L 1/25* (2006.01)

(21) Numéro de dépôt: **00403133.2**

(22) Date de dépôt: **10.11.2000**

(54) **Procédé pour mesurer par ultrasons la tension résiduelle d'une barre de précontrainte**

Verfahren zur Messung der Restspannung eines vorgespannten Balkens mit Ultraschall

Procedure for measuring the residual tension of a prestressed bar with ultrasound

(84) Etats contractants désignés:
**CH FR GB LI MC**

(30) Priorité: **29.11.1999 FR 9914989**

(43) Date de publication de la demande:
**30.05.2001 Bulletin 2001/22**

(73) Titulaire: **Freyssinet**
**78140 Velizy Villacoublay (FR)**

(72) Inventeurs:
• **Basile, Bernard**
**78370 Plaisir (FR)**
• **Lancia, Bruno**
**13009 Marseille (FR)**

(74) Mandataire: **Loisel, Bertrand**
**Cabinet Plasseraud**
**65/67 rue de la Victoire**
**75440 Paris Cedex 09 (FR)**

(56) Documents cités:
**WO-A-97/11343          FR-A- 2 507 232**
**FR-A- 2 750 498         US-A- 4 413 518**

**Description**

La présente invention concerne un procédé pour mesurer in situ la tension résiduelle $F_1$ d'une barre de précontrainte tendue entre deux ancrages, en déterminant un temps d'aller-retour $T_1$ d'une onde ultrasonore entre les deux extrémités longitudinales de la barre, et en évaluant la tension résiduelle $F_1$ par une formule de la forme $F_1 = F_0 + k_b.(T_1-T_0)$, où $F_0$, $T_0$ et $k_b$ sont des constantes déterminées lors d'un étalonnage préalable effectué sans démontage de la barre.

Un procédé de ce type est décrit dans le brevet français 2 750 498. Suivant ce brevet, l'étalonnage préalable consiste à :

- appliquer à une extrémité de la barre de précontrainte un effort de traction F progressivement croissant ;
- mesurer simultanément le déplacement longitudinal A de l'extrémité de la barre de précontrainte ainsi que l'effort de traction F susmentionné, ces mesures correspondant à une courbe de l'effort de traction F en fonction du déplacement A qui présente une portion initiale suivant sensiblement une première droite très pentue, puis une portion courbe, et enfin une portion finale suivant sensiblement une deuxième droite moins pentue ;
- déterminer la tension résiduelle comme étant la valeur de l'effort de traction F qui correspond à l'intersection des deux droites ;
- appliquer successivement à la barre de précontrainte au moins deux valeurs de tension connues et distinctes supérieures à la tension résiduelle, par traction sur l'extrémité de ladite barre de précontrainte ;
- mesurer, pour chacune de ces valeurs de tension, le temps d'aller-retour d'une onde ultrasonore entre les deux extrémités longitudinales de la barre de précontrainte ;
- et déduire de ces mesures les constantes de la formule d'évaluation de la tension résiduelle.

Grâce à ces dispositions, il n'est nécessaire d'appliquer des efforts de traction à l'extrémité de la barre de précontrainte que lors de l'étalonnage, effectué une fois pour toutes.

Une fois l'étalonnage effectué, on peut contrôler ultérieurement, aussi souvent que nécessaire, la tension résiduelle de la barre de précontrainte, uniquement en mesurant le temps d'aller-retour d'une onde ultrasonore entre les deux extrémités de cette barre : ces contrôles ultérieurs sont donc très simples et très rapides. Ce procédé est bien adapté aux cas où il y a des restrictions à l'accès à la structure, par exemple à cause de rayonnements ionisants.

La présente invention a pour but d'améliorer la précision des procédés de mesure de tension résiduelle par ultrasons.

Dans un procédé selon l'invention, du type énoncé en introduction, l'étalonnage préalable comprend les étapes suivantes :

- soumettre la barre à différentes valeurs d'un effort de traction F, appliqué dans une zone située en dehors de l'intervalle entre les deux ancrages ;
- pour chaque valeur de l'effort de traction appliqué F, mesurer le temps d'aller-retour T d'une onde ultrasonore entre les deux extrémités longitudinales de la barre, de façon à mémoriser des points d'une courbe associant l'effort de traction F au temps d'aller-retour T ;
- déterminer la constante $T_0$ comme étant le temps d'aller-retour T mesuré pour un effort de traction F = 0 ;
- approcher ladite courbe, au voisinage de la valeur d'effort de traction F = 0, par une première droite de pente $k_a$ ;
- approcher une portion supérieure de ladite courbe par une seconde droite de pente $k_L$ ;
- déterminer la constante $F_0$ comme étant l'effort de traction F correspondant au point d'intersection desdites première et seconde droites ; et
- déterminer la constante $k_b$ selon la relation $1/k_b = (1/k_L) - (1/k_a)$.

Ceci permet d'améliorer notamment la détermination du coefficient $k_b$, par une prise en compte rigoureuse des effets parasites que le système d'étalonnage peut induire. La première droite approchant la courbe (T, F) au voisinage du point $(T_0, 0)$ rend compte de l'allongement de la barre dans la région située entre le point d'application de l'effort de traction F et l'ancrage adjacent, alors que la seconde droite rend compte de l'augmentation de la longueur L entre le point d'application de l'effort de traction et l'ancrage opposé. En service, et notamment lors des vérifications ultérieures, c'est seulement la longueur b = L - a entre les deux ancrages qui est soumise à la tension résiduelle $F_1$. Il est donc judicieux que le coefficient de pente $k_b$ soit corrigé par rapport à la pente $k_L$ de la seconde droite. Cette correction sera d'autant plus importante que la barre de précontrainte est relativement courte.

Dans un mode d'exécution préféré du procédé, l'approximation de ladite courbe au voisinage de la valeur d'effort de traction F = 0 par une première droite de pente $k_a$ comporte un ajustement d'une parabole sur une portion inférieure de la courbe, et la détermination de la première droite comme étant la tangente de ladite parabole pour la valeur d'effort de traction F = 0.

L'étalonnage préalable comprend avantageusement une mesure de la température du matériau de la barre, et une mémorisation de la température mesurée, ce qui permet de tenir compte ensuite des effets de la température sur les temps de propagation mesurés. Ainsi, lors d'une phase de mesure postérieure à l'étalonnage, on mesure la température du matériau de la barre et le temps d'aller-retour d'une onde ultrasonore entre les deux extrémités longitudinales de la barre, et on détermine le temps $T_1$ pour l'application de la formule précitée en corrigeant le temps d'aller-retour mesuré en fonction de l'écart entre les températures mesurées lors de l'étalonnage préalable et de la phase de mesure postérieure.

D'autres particularités et avantages de la présente invention apparaîtront dans la description ci-après d'exemples de réalisation non limitatifs, en référence aux dessins annexés, dans lesquels :

- la figure 1 est une vue schématique montrant un exemple de mise en oeuvre du procédé selon l'invention ; et
- les figures 2 et 3 sont des graphes montrant schématiquement des exemples d'évolution de l'effort de traction F appliqué près d'une extrémité de la barre de précontrainte en fonction du temps d'aller-retour des ondes ultrasonores lors de l'étalonnage préalable du procédé selon l'invention.

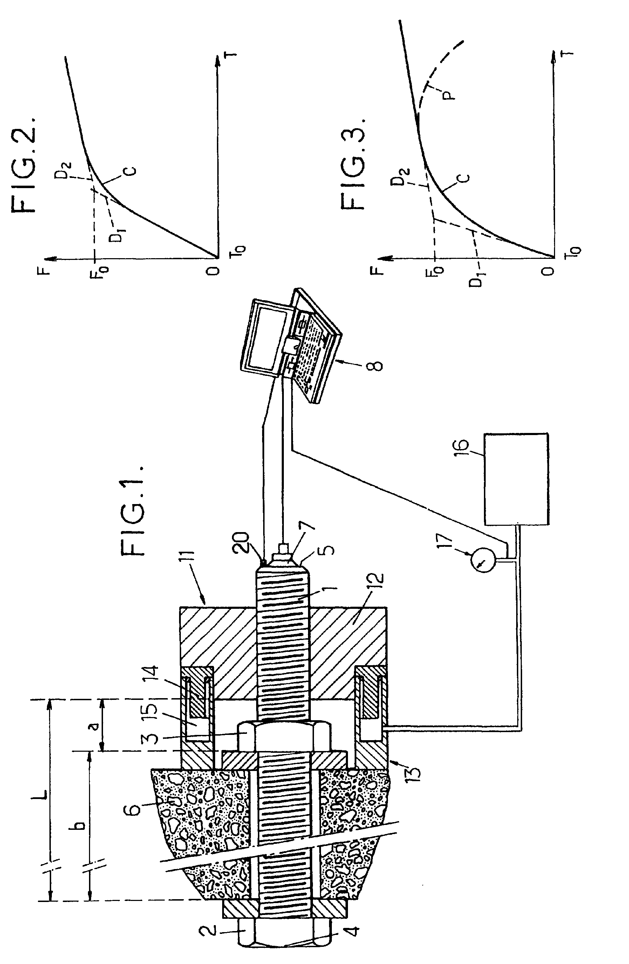

Comme représenté sur la figure 1, le procédé selon l'invention est destiné à mesurer la tension résiduelle $F_1$ d'une barre de précontrainte 1, par exemple métallique, qui est tendue entre deux ancrages 2, 3 situés respectivement au voisinage des extrémités longitudinales 4, 5 de ladite barre.

La longueur de la barre de précontrainte 1 entre ses deux extrémités 4, 5 est typiquement inférieure à 5 mètres et généralement inférieure à 2 mètres, par exemple comprise entre 50 cm et 2 mètres.

Dans l'exemple non limitatif représenté sur les dessins, les ancrages 2, 3 sont constitués l'un par une tête élargie 2 faisant partie intégrante de la barre de précontrainte, et l'autre par un écrou 3 vissé sur la barre 1 qui est filetée en totalité ou en partie. Ces deux ancrages appliquent un effort de compression sur un massif de béton 6 ou autre massif à précontraindre.

Afin de pouvoir contrôler régulièrement la tension résiduelle $F_1$ de la barre de précontrainte 1 par ultrasons, on procède à un étalonnage préalable du dispositif relativement à la barre considérée.

A cet effet, on équipe la barre 1, en dehors du massif 6, d'un transducteur ultrasonore 7 et d'un ensemble 11 permettant d'exercer une traction sur la barre de précontrainte.

Le transducteur 7, permettant d'émettre et de capter des ondes ultrasonores, est placé sur l'extrémité 5 de la barre 1. Il est relié directement ou indirectement à une carte électronique spéciale intégrée dans un micro-ordinateur 8, cette carte permettant de commander le transducteur 7 pour émettre à l'extrémité 5 une onde ultrasonore de préférence impulsionnelle. Le transducteur 7 permet en outre de capter l'écho de cette onde à l'extrémité 5, après réflexion sur l'extrémité 4 de la barre de précontrainte, afin de mesurer le temps d'aller-retour T de l'onde ultrasonore entre les deux extrémités.

Dans l'exemple représenté sur la figure 1, l'ensemble 11 comporte une bague métallique 12 vissée sur une zone de la barre de précontrainte 1 située entre son extrémité 5 et l'ancrage 3, et un vérin hydraulique annulaire 13 disposé autour de la barre de précontrainte 1 et interposé axialement entre le massif 6 et la bague 12, ce vérin comportant un piston annulaire 14 qui coulisse dans un cylindre annulaire 15 alimenté en fluide hydraulique par une pompe 16.

Le circuit hydraulique du vérin 13 est équipé d'un capteur de pression 17 pour mesurer la force de traction exercée par le vérin 13 sur la barre de précontrainte 1 (en tenant compte de la section utile du vérin et de son rendement). En variante, la mesure d'effort pourrait être effectuée en plaçant un capteur d'effort entre le vérin 13 et la bague 12, ou entre le massif 6 et le vérin 13.

L'effort mesuré est adressé à une carte électronique d'acquisition appartenant au micro-ordinateur 8, de façon que ce micro-ordinateur puisse enregistrer la valeur des efforts de traction F appliqués à la barre de précontrainte 1.

Au cours de l'étape d'étalonnage, on commande la pompe 16 pour augmenter progressivement l'effort de traction F appliqué à la barre de précontrainte, et pendant ce temps, le micro-ordinateur 8 mesure et enregistre simultanément le temps d'aller-retour T, au moyen du transducteur 7 placé à l'extrémité 5 de la barre de précontrainte, et l'effort de traction F au moyen du capteur.

Ces enregistrements correspondent à des points d'une courbe de l'effort de traction F en fonction du temps d'aller-retour T, telle que la courbe C représentée sur la figure 2 ou 3.

Cette courbe C présente typiquement :

- une portion initiale qui suit approximativement une droite $D_1$ de pente $k_a$ relativement importante, représentative de l'allongement de la partie de la barre 1 comprise entre l'écrou 3 et la bague 12,
- puis une portion supérieure qui, aux grandes valeurs de l'effort F, suit sensiblement une droite $D_2$ de pente $k_L < k_a$, représentative de l'allongement de l'ensemble de la partie contrainte de la barre 1, laquelle partie a pour longueur $L = b+a$, où b est la longueur comprise entre les deux ancrages 2, 3 et a la longueur comprise entre l'ancrage 3 et la bague 12 (figure 1).

Comme cela est connu en soi, l'intersection des droites $D_1$ et $D_2$ correspond à une ordonnée $F_0$ qui représente la tension résiduelle de la barre de précontrainte lors de l'étalonnage.

Le micro-ordinateur 8 est programmé pour déterminer les droites $D_1$ et $D_2$ ainsi que leur point d'intersection. Il en déduit une constante $F_0$ qui est l'effort de traction F correspondant à ce point d'intersection, c'est-à-dire la valeur de la tension résiduelle lors de l'étalonnage.

Le micro-ordinateur 8 mémorise également la valeur $T_0$ du temps d'aller-retour T obtenu lors de l'étalonnage en l'absence d'application de l'effort de traction, soit pour F = 0.

Le point de coordonnées $(T_0, F_0)$ est un point de la courbe liant le temps d'aller-retour à la tension résiduelle dans la barre de précontrainte, en l'absence du système d'étalonnage. Comme on sait que cette courbe est linéaire, son équation est de la forme :

$$F_1 = F_0 + k_b \cdot (T_1 - T_0), \tag{1}$$

ce qui permet de déduire la valeur de la tension résiduelle $F_1$ de la simple mesure d'un temps d'aller-retour $T_1$.

Pour déterminer le coefficient de pente $k_b$, lors de l'étalonnage, le micro-ordinateur 8 utilise la relation :

$$1/k_b = (1/k_L) - (1/k_a). \tag{2}$$

Grâce à cela, le coefficient $k_b$ rend bien compte du comportement de la zone contrainte, de longueur b, de la barre 1.

Dans l'exemple illustré par la figure 2, on considère que la courbe C consiste essentiellement en deux portions linéaires, se raccordant par une portion arrondie. Le micro-ordinateur 8 ajuste alors deux droites $D_1$ et $D_2$ de pentes $k_a$ et $k_L$ sur les portions inférieure et supérieure de la courbe résultant des mesures faites lors de l'étalonnage, par exemple par une méthode classique de moindres carrés, et en déduit la constante $F_0$ ainsi que la constante $k_b$ selon la relation (2).

Pour améliorer encore la précision de l'étalonnage, le micro-ordinateur 8 peut être programmé pour ajuster une parabole P sur la portion inférieure de la courbe C. En effet, on peut montrer que compte tenu des filetages venant en prise sur la barre de précontrainte 1, la portion inférieure de la courbe C est parabolique plutôt que linéaire. La figure 3 illustre une telle réalisation (en exagérant la courbure de la parabole P). Les calculs précédemment décrits sont conduits de la même manière, en utilisant comme droite $D_1$ la tangente au point $(T_0, 0)$ de la parabole déterminée. Cette droite $D_1$ réalise une approximation des points de la courbe C les plus proches de l'origine $(T_0, 0)$ L'étalonnage ayant été effectué une fois pour toutes, lorsqu'on veut par la suite contrôler la valeur de tension résiduelle $F_1$ de la barre de précontrainte 1, il n'est plus nécessaire d'équiper l'extrémité 5 de cette barre de l'ensemble 11, mais uniquement du transducteur 7 relié au micro-ordinateur 8.

Le micro-ordinateur 8 fait alors simplement émettre par le transducteur 7 une onde ultrasonore de préférence impulsionnelle à l'extrémité 5 de la barre de précontrainte, puis le transducteur 7 capte l'onde ultrasonore en retour après réflexion à l'extrémité 4 de la barre, et le micro-ordinateur 8 mesure le temps d'aller-retour $T_1$ de l'onde ultrasonore. A partir de ce temps d'aller-retour $T_1$, le micro-ordinateur 8 déduit la valeur de la tension résiduelle $F_1$ à l'instant de mesure, par la formule (1).

On sait que la température d'un matériau, tel l'acier de la barre 1, a une influence sur la vitesse de propagation des ultrasons dans ce matériau et donc sur le temps de propagation aller-retour mesuré. En conséquence, si la température de la barre est susceptible de varier, il est avantageux de prévoir une correction automatique dans le traitement des mesures, par application d'une formule du type

$$T_1 = T_m + \beta \cdot (\theta_m - \theta_i) \tag{3}$$

où $T_m$ est le temps d'aller-retour mesuré à la température $\theta_m$, $T_1$ est le temps corrigé employé pour l'application de la formule (1), correspondant à une température $\theta_i$, par exemple la température lors de l'étalonnage, $\beta$ une constante prédéterminée dépendant du matériau et de ses caractéristiques géométriques.

La température $\theta_i$ du matériau de la barre est mesurée lors de l'étalonnage, puis lors des mesures ultérieures pour que la correction (3) soit appliquée. La mesure de température peut être réalisée au moyen d'un capteur 20, tel qu'un thermocouple, voisin du transducteur ultrasonore 7 ou intégré à celui-ci.

**Revendications**

1. Procédé pour mesurer in situ la tension résiduelle $F_1$ d'une barre de précontrainte (1) tendue entre deux ancrages (2, 3), en déterminant un temps d'aller-retour $T_1$ d'une onde ultrasonore entre les deux extrémités longitudinales (4, 5) de la barre, et en évaluant la tension résiduelle $F_1$ par une formule de la forme $F_1 = F_0 + k_b.(T_1-T_0)$, où $F_0$, $T_0$ et $k_b$ sont des constantes déterminées lors d'un étalonnage préalable effectué sans démontage de la barre, l'étalonnage préalable comprenant les étapes suivantes :

   - soumettre la barre à différentes valeurs d'un effort de traction F, appliqué dans une zone située en dehors de l'intervalle entre les deux ancrages ;
   - pour chaque valeur de l'effort de traction appliqué F, mesurer le temps d'aller-retour T d'une onde ultrasonore entre les deux extrémités longitudinales de la barre, de façon à mémoriser des points d'une courbe (C) associant l'effort de traction F au temps d'aller-retour T ;
   - déterminer la constante $T_0$ comme étant le temps d'aller-retour T mesuré pour un effort de traction F = 0 ;
   - approcher ladite courbe, au voisinage de la valeur d'effort de traction F = 0, par une première droite ($D_1$) de pente $k_a$ ;
   - approcher une portion supérieure de ladite courbe par une seconde droite ($D_2$) de pente $k_L$ ;
   - déterminer la constante $F_0$ comme étant l'effort de traction F correspondant au point d'intersection desdites première et seconde droites ; et
   - déterminer la constante $k_b$ selon la relation $1/k_b = (1/k_L) - (1/k_a)$.

2. Procédé selon la revendication 1, dans lequel l'approximation de ladite courbe (C) au voisinage de la valeur d'effort de traction F = 0 par une première droite de pente $k_a$ comporte un ajustement d'une parabole (P) sur une portion inférieure de la courbe, et la détermination de la première droite ($D_1$) comme étant la tangente de ladite parabole pour la valeur d'effort de traction F = 0.

3. Procédé selon la revendication 1 ou 2, dans lequel l'étalonnage préalable comprend une mesure de la température ($\theta_i$) du matériau de la barre (1), et une mémorisation de la température mesurée.

4. Procédé selon la revendication 3, dans lequel, lors d'une phase de mesure postérieure à l'étalonnage, on mesure la température ($\theta_m$) du matériau de la barre (1) et le temps d'aller-retour ($T_m$) d'une onde ultrasonore entre les deux extrémités longitudinales (4, 5) de la barre, et on détermine le temps $T_1$ pour l'application de ladite formule en corrigeant le temps d'aller-retour mesuré ($T_m$) en fonction de l'écart entre les températures ($\theta_i$, $\theta_m$) mesurées lors de l'étalonnage préalable et de la phase de mesure postérieure.

**Claims**

1. A method for measuring in situ the residual tension $F_1$ of a pre-stressed bar (1) braced between two anchorages (2, 3) by determining a two-way propagation time $T_1$ of an ultra-sonic wave between the two longitudinal ends (4, 5) of the bar and by evaluating the residual tension $F_1$ by a formula of the form $F_1 = F_0 + k_b.(T_1-T_0)$, where $F_0$, $T_0$ and $k_b$ are constants determined during a preliminary calibration carried out without demounting the bar, whereby the preliminary calibration comprises the steps of:

   - subjecting the bar to different values of a traction effort F, applied in a zone situated outside of the interval between the two anchorages;
   - for each value of the applied traction effort F, measuring the two-way propagation time T of an ultra-sonic wave between the two longitudinal ends of the bar, to memorize points of a curve (C) associating the traction effort F with the two-way propagation time T;
   - determining the constant $T_0$ as being the two-way propagation time T measured for a traction effort F = 0;
   - approaching said curve, in the neighborhood of the traction effort value F = 0, by a first straight line ($D_1$) having a slope $k_a$;
   - approaching an upper portion of said curve by a second straight line ($D_2$) having a slope $k_L$;
   - determining the constant $F_0$ as being the traction effort F corresponding to the point of intersection of said first and second straight lines; and
   - determining the constant $k_b$ according to $1/k_b = (1/k_L) - (1/k_a)$.

2. A method according to Claim 1, wherein the approximation of said curve (C) in the neighborhood of the value of the traction effort F = 0 by a first straight line having a slope $k_a$ comprises a fit of a parabola (P) on a lower portion of the curve, and the determination of the first straight line (D$_1$) as being the tangent of said parabola for the value of traction effort F = 0.

3. A method according to Claim 1 or 2, wherein the preliminary calibration comprises a measurement of the temperature ($\theta_i$) of the material of the bar (1) and a memorization of the temperature measured.

4. A method according to Claim 3, wherein a measuring phase subsequent to the calibration comprises the steps of measuring the temperature ($\theta_m$) of the material of the bar (1) and the two-way propagation time ($T_m$) of an ultra-sonic wave between the two longitudinal ends (4, 5) of the bar, and determining the time $T_1$ for the application of said formula by correcting the measured two-way propagation time ($T_m$) as a function of the deviation between the temperatures ($\theta_i$, $\theta_m$) measured during the preliminary calibration and the subsequent measuring phase.

**Patentansprüche**

1. Verfahren zur *in-situ*-Messung der Restspannung $F_1$ eines zwischen zwei Verankerungen (2, 3) eingespannten Spannstabes (1), indem der Zeitraum $T_1$ des Hin- und Rücklaufs einer Ultraschallwelle zwischen den zwei Längsenden (4,5) des Stabes ermittelt und die Restspannung $F_1$ mit der Formel $F_1 = F_0 + k_b(T_1 - T_0)$ bestimmt wird, in welcher $F_0$, $T_0$ und $k_b$ Konstanten sind, die durch einen Kalibriervorgang ermittelt worden sind, der zuvor ohne einen Auseinanderbau des Stabes durchgeführt wurde und die Schritte:

- Aussetzen des Stabes verschiedenen Werten einer Zugkraft F, die in einem Bereich ausgeübt wird, der sich außerhalb der Entfernung zwischen den zwei Verankerungen befindet,
- Messen von Hin- und Rücklaufzeit T einer Ultraschallwelle zwischen den zwei Längsenden des Stabes für jeden Wert der ausgeübten Zugkraft F derart, dass die Punkte einer Kurve (C), welche die Zugkraft F mit der Hin- und Rücklaufzeit T verknüpft, gespeichert werden,
- Bestimmen der Konstanten $T_0$ als Hin- und Rücklaufzeit T, die für die Zugkraft F = 0 gemessen wird,
- Approximieren der Kurve in der Nähe des Wertes für die Zugkraft F = 0 durch eine erste Gerade (D$_1$) der Steigung $k_a$,
- Approximieren eines oberen Bereichs dieser Kurve durch eine zweite Gerade (D$_2$) der Steigung $k_L$,
- Bestimmen der Konstanten $F_0$ als die Zugkraft F, die dem Schnittpunkt von erster und zweiter Geraden entspricht, und
- Bestimmen der Konstanten $k_b$ gemäß der Relation $1/k_b = (1/k_L) - (1/k_a)$ umfasst.

2. Verfahren nach Anspruch 1, in welchem die Approximation der Kurve (C) in der Nähe des Wertes der Zugkraft F = 0 durch eine erste Gerade der Steigung $k_a$ eine Anpassung einer Parabel (P) über einen unteren Bereich der Kurve und die Bestimmung der ersten Geraden (D$_1$) als die Tangente der Parabel für den Wert der Zugkraft F = 0 umfasst.

3. Verfahren nach Anspruch 1 oder 2, in welchem die vorhergehende Kalibrierung die Messung der Temperatur ($\theta_i$) des Materials des Stabes (1) und die Speicherung der gemessenen Temperatur umfasst.

4. Verfahren nach Anspruch 3, in welchem in einer auf die Kalibrierung folgenden Messphase die Temperatur ($\theta_m$) des Materials des Stabes (1) und die Hin- und Rücklaufzeit ($T_m$) einer Ultraschallwelle zwischen den zwei Längsenden (4, 5) des Stabes gemessen werden und die Zeit $T_1$ für die Anwendung der Formel bestimmt wird, indem die gemessene Hin- und Rücklaufzeit ($T_m$) in Abhängigkeit von der Differenz zwischen den Temperaturen ($\theta_i$, $\theta_m$) korrigiert wird, die in der vorhergehenden Kalibrierung und in der anschließenden Messphase gemessen worden sind.

FIG.1.

FIG.2.

FIG.3.